# EUROPEAN PATENT SPECIFICATION

(11) **EP 2 131 299 B1**
(45) Date of publication and mention of the grant of the patent: **13.03.2013**
(21) Application number: 08251985.1
(22) Date of filing: 06.06.2008
(51) Int. Cl.: G06F 21/00

(54) **Protecting software programs**
Geschützte Softwareprogramme
Protection de programmes logiciels

(43) Date of publication of application: 09.12.2009
(73) Proprietor: ITI Scotland Limited, Glasgow G2 2LB (GB)
(72) Inventor: Stewart, Neil c/o Slam Games, Glasgow, Scotland G2 2QZ (GB); Harkness, Graeme c/o Slam Games, Glasgow, Scotland G2 2QZ (GB)
(74) Representative: O'Connell, David Christopher

(56) References cited:
- US-A1- 2003 093 685
- US-A1- 2005 183 072
- NATE LAWSON: "Anti-debugging: using up a resource versus checking it" ROOT LABS RDIST, [Online] 21 May 2008 (2008-05-21), XP002493748 Retrieved from the Internet: URL:http://rdist.root.org/2008/05/21/anti- debugging-using-up-a-resource-versus-check ing-it/> [retrieved on 2008-08-28]
- JON ERICKSON: "HACKING: THE ART OF EXPLOITATION" October 2004 (2004-10), NO STARCH , XP002493749 ISBN: 1-59327-007-0 Retrieved from the Internet: URL:http://proquest.safaribooksonline.com/ 1593270070> Section "0x320. Buffer Overflows" Section "0x321. Stack-Based Buffer Overflow Vulnerabilities."
- COLLBERG C ET AL: "A Taxonomy of Obfuscating Transformations" TECHNICAL REPORT DEPARTMENT OF COMPUTER SCIENCE UNIVERSITY OFAUCKLAND, XX, XX, no. 148, 1 July 1997 (1997-07-01), pages 1-36, XP002140038
- MICHAEL N GAGNON ET AL: "Software Protection through Anti-Debugging" IEEE SECURITY AND PRIVACY, IEEE COMPUTER SOCIETY, NEW YORK, NY, US, vol. 5, no. 3, 1 May 2007 (2007-05-01), pages 82-84, XP011182667 ISSN: 1540-7993

## Description

This invention relates to a method for protecting software programs, and in particular for a method that protects software programs against attacks that use hardware breakpoints, or similar mechanisms, to compromise a program.

In releasing a software application for execution on end users' hardware, a program developer is effectively providing a user with complete access to the program code of that application. Unfortunately, it is a fact that some end-users will attempt to compromise a software application in order, for example, to obtain illegal copies, gain unlicensed access to certain features, steal IP from the application, inject malicious code or cheat in online games. Indeed, in the context of online gaming, which often seek to support hundreds or thousands of players simultaneously over a network, the occurrence of online cheating can seriously undermine honest players' experience of the game. Free access to executable code by unauthorised users can often result in loss of intellectual property and provides the user with an easy means for probing the application for security vulnerabilities. Also, applications may be reverse engineered and then modified to remove metering or usage control before being recompiled, ultimately resulting in a loss of revenue for the code provider.

Thus, the environment into which publishers release their programs can be considered to be a hostile one. There is therefore a need to protect programs from tampering or misuse, which may involve unauthorised modification and/or copying.

It has been recognized that hardware breakpoints may be used to perform unauthorised actions on a program. Typically, a hardware breakpoint is set by storing a memory address in a register (sometimes referred to as a "debug register"). When a running application accesses the memory at the stored memory address, the application is interrupted, and an exception is generated. The execution of the application code is halted, and a piece of user code is run. This mechanism is provided to allow for debugging of software. Thus, a legitimate user such as a software developer can set the hardware breakpoints such that debug operations can be performed when the application accesses the memory at one of the stored memory addresses. It should be noted that this mechanism, or something very similar, exists in many different processors and systems, although the terminology that is used to describe it may differ from one processor to another.

Although hardware breakpoints are provided to allow a legitimate user to perform a necessary function, it has also been suggested that hardware breakpoints may be set by a malicious user in such a way that illegitimate operations are performed when the application accesses the memory at one of the stored memory addresses.

Preferred embodiments of the present invention seek to provide methods of protecting software against such attacks.

An item, posted on the internet under the title "Anti-debugging: using up a resource versus checking it", at hftp://rdist.root.org, suggests replacing a function call with code that stores a trigger for a breakpoint, followed by code that would cause a jump to a function that would cause the program to crash. The breakpoint is set so that it causes a jump to the real target function, unless it has been tampered with, in which the function that causes the program to crash is executed.

According to a first aspect of the present invention, there is provided a method of protecting a software program, the method comprising:
including in the program at least one corruption function (38, 40, 42, 44) having a starting location (46, 48, 50, 52);
including in the program at least one instruction (54, 56, 58, 60) that causes the program to be directed to the corruption function;
including in the program, code for setting an available hardware breakpoint such that, when the program has been directed to the corruption function and the starting location is reached, an exception is generated and the handling of the exception generates a return instruction so that the normal running of the program is resumed, causing the corruption function not to run.

According to a second aspect of the present invention, there is provided a computer program product, comprising:
at least one corruption function having a starting location;
at least one instruction that causes the program to be directed to the corruption function; and
characterised by:
   code for setting an available hardware breakpoint such that, when the program has been directed to the corruption function and the starting location is reached, an exception is

generated and the handling of the exception generates a return instruction so that the normai running of the program is resumed, causing the corruption function not to run. For a better understanding of the present invention, and to show how it may be put into effect, reference will now be made, by way of example, to the accompanying drawings, in which:-
Figure 1 is a flow chart, illustrating a method in accordance with the present invention.
Figure 2 illustrates a state of a software program, before application of the method of Figure 1.
Figure 3 illustrates a state of a software program, after application of the method of Figure 1.
Figure 4 illustrates a state of debug registers in a processor running the software program of Figure 3.

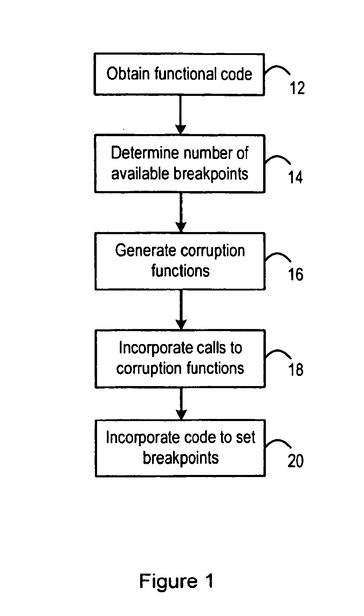

Figure 1 is a flow chart, illustrating a method in accordance with the present invention.

In step 12, a functional software program is obtained. The program may be any existing program, to which it is desired to add a level of protection, in order to prevent at least one possible attack on the program. The description here assumes that the functional software program is written first, and that the method of Figure 1 is applied to it subsequently. Since the method of Figure 1 makes use of the debug registers that can be used by the software developer to debug the program, it may be most convenient for the method to be applied after the program has been written and debugged. However, it is equally possible that the steps required to protect the program could be incorporated while the program is being written. In addition, although it is assumed here that the method of Figure 1 is applied to the program after it has been compiled into executable code, it could also be performed on the application source code, or on any intermediate abstract representation of the code, for example an abstract syntax tree or a single static assignment form. Moreover, the steps can be performed manually, or automatically by a suitable further program.

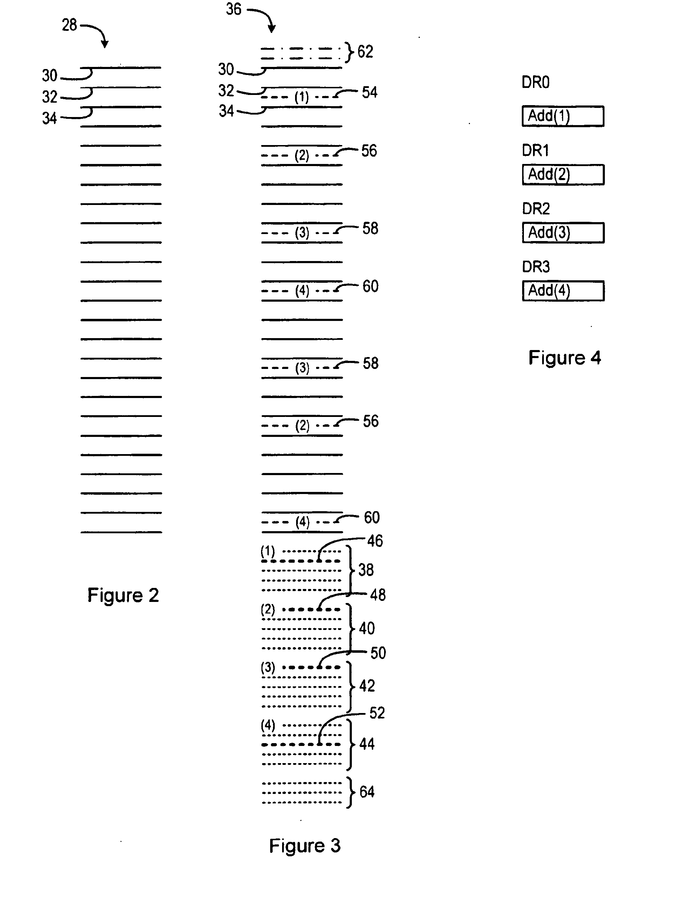

Figure 2 is a schematic representation of the functional software program 28, containing multiple instructions 30, 32, 34, etc. The reader will appreciate that, in any realistic example, the program 28 will contain many thousands of separate instructions.

In step 14, a determination is made regarding the hardware platform on which the software is to run. The method of Figure 1 protects the software program specifically against an attack that is based on the use of hardware breakpoints, although related methods can be used to protect the program against similar attacks using other available mechanisms.

However, where, as here, the method is being used to protect the software program against an attack that is based on the use of hardware breakpoints, it is preferable to have some information about the hardware on which the software is intended to be run by the eventual end users, and hence to have some information about the hardware breakpoints that will be available.

For example, where the hardware is to be run on a typical personal computer, it will be recognised that most PCs contain processors in which four hardware breakpoints may be set. In other situations, it may be necessary to have more detailed information about the class of processor, or the specific processor, on which the software will be run, in order to be able to take full account of the available hardware breakpoints.

Specifically, the method of Figure 1 requires that the number of available hardware breakpoints be taken into consideration, and requires knowledge of the mechanism for setting the hardware breakpoints.

In step 16 of the method shown in Figure 1, one or more corruption functions is/are generated, and incorporated in the program 28 of Figure 2. In the presently preferred embodiment described here, there is one corruption function associated with each of the available hardware breakpoints. That is, four hardware breakpoints may be set, and so four corruption functions are generated, although a smaller number of corruption functions will still provide some protection against some attacks that may be applied against the program.

Figure 3 shows the software program 36 after it has been modified in accordance with the method of Figure 1. Thus, the modified program 36 still contains the instructions 30, 32, 34 of the unmodified program 28, as well as four corruption functions 38, 40, 42,44.

The corruption functions 38, 40, 42, 44 are blocks of code that, if they are run, adversely affect the running of the application. Preferably, the corruption functions cause serious and irreparable damage to the execution of the application. For example, an application may be made unable to save files, or may crash after a limited period of user activity. Further, the corruption function should preferably be such that its operation cannot be overridden by the user of the software (who may be the person trying to perform the unauthorised operation on the software), or by the program itself. As an example, the corruption function might make random modifications to data stored on the process stack, for example by writing random values to particular locations, or writing zeroes to random locations. However, it will be appreciated that there are a very large number of possible functions that could be used in this way as corruption functions.

Each of the corruption functions 38, 40, 42, 44 has a respective starting instruction 46, 48, 50, 52, which is at or before the start of the code that causes the corruption. There may be one or more instruction before the starting instruction, provided that this does not have any detrimental effect on the program.

In step 18, a large number of instructions are inserted into the functional code, these inserted instructions representing calls to the corruption functions. As shown in Figure 3, there are instructions 54 that call the first instruction of the first corruption function 38, instructions 56 that call the first instruction of the second corruption function 40, instructions 58 that call the first instruction of the third corruption function 42, and instructions 60 that call the first instruction of the fourth corruption function 44.

These instructions are inserted at locations within the functional code that mean that one or more of the instructions will inevitably be reached whenever the program is run. In the case of an averagely complex program of a few megabytes, there may be of the order of 10,000 of these instructions.

At step 20, additional code 62 is added to the program. This additional code causes the hardware breakpoints to be set to desired values when the program is first run. In addition, an exception handler 64 is included, as described in more detail below.

Specifically, as shown in Figure 4, where the hardware breakpoints are set in debug registers DR0, DR1, DR2, DR3, the first debug register DR0 contains the starting address 46 of the first corruption function 38, the second debug register DR1 contains the starting address 48 of the second corruption function 40, the third debug register DR2 contains the starting address 50 of the third corruption function 42, and the fourth debug register DR3 contains the starting address 52 of the fourth corruption function 44.

Thus, whenever the program is run, one of the instructions 54, 56, 58, 60 is reached at regular intervals. This causes the system to call one of the corruption functions 38, 40, 42, 44. However, while the hardware breakpoints are set at the starting addresses of the corruption functions, this always causes an exception to be generated.

When an exception is generated, the program passes to the exception handler 64.
This is user code that therefore runs when a hardware breakpoint is triggered. The code is written such that it generates a return instruction so that the normal running of the program is resumed, without executing the corruption function.

If instead the malicious user sets any other value in one of the debug registers, in order to use the hardware breakpoint for his own malicious purposes, the corruption function is called, and the program stops operating.

It should be noted that some processors allow hardware breakpoints to be set in such a way that they operate not on single memory addresses, but on blocks of memory. In such cases, care must be taken to ensure that the starting addresses of the corruption functions are placed appropriately that they cannot be encompassed by a single hardware breakpoint.

As described above, each of the instructions 54, 56, 58, 60 calls the relevant one of the corruption functions, whenever it is reached. However, in order to cause the program to operate in a more non-deterministic way, and thereby make it more difficult for an unauthorized user to perform illegitimate operations on the software, it is possible to introduce a mechanism that means that the instructions 54, 56, 58, 60 do not always call the relevant one of the corruption functions. For example, the instructions 54, 56, 58, 60 may be such that, when they are reached, a timestamp counter of the processor is examined (i.e. an RDTSC instruction in the case of an Intel® x86 processor). Then, the relevant one of the corruption functions may be called only when the lower bits of the timestamp counter value take a certain value or fall within a certain range.

Thus, because the lower bits of the timestamp counter value change so frequently, it is effectively impossible in advance to predict whether the instructions 54, 56, 58, 60 will in fact call the relevant corruption function. That is, the instructions 54, 56, 58, 60 will only call the relevant corruption function when a non-deterministic condition is met. Although the value of the lower bits of the timestamp counter value are used as the non-deterministic condition in this example, it will be apparent that other non-deterministic conditions could be used.

The method described herein works most successfully when used in conjunction with an anti-tamper mechanism, of the type that can detect and prevent any modification of the code.

There is thus described a system that provides a degree of protection of a program against an attack based on hardware breakpoints.

## Claims

1. A method of protecting a software program, the method comprising:
including in the program at least one corruption function (38, 40, 42, 44) having a starting location (46, 48, 50, 52);
including in the program at least one instruction (54, 56, 58, 60) that causes the program to be directed to the corruption function;
**characterised by**:
including in the program, code for setting an available hardware breakpoint such that, when the program has been directed to the corruption function and the starting location is reached, an exception is generated and the handling of the exception generates a return instruction so that the normal running of the program is resumed, causing the corruption function not to run.

2. A method as claimed in claim 1, wherein the software program is intended for use on hardware having a known number of available instruction breakpoints, the method comprising:
including in the program a plurality of corruption functions, each having a respective starting instruction, one corruption function being included for each of said available instruction breakpoints; and
including in the program at least one instruction that causes the program to be directed to each corruption function;
wherein each available instruction breakpoint is set such that, when the program has been directed to one of the corruption functions and the respective one of said starting instructions is reached, a respective exception is generated, and the handling of each exception generates a return instruction so that the normal running of the program is resumed, so that the respective corruption function does not run.

3. A method as claimed in claim 1 or 2, wherein the corruption function causes random data to be written to a processor stack.

4. A method as claimed in claim 1 or 2, wherein the corruption function causes data to be written to random locations in a processor stack.

5. A method as claimed in claim 1, wherein the at least one instruction causes the program to be directed to the corruption function only when a non-deterministic condition is met.

6. A method as claimed in claim 5, wherein the non-deterministic condition relates to lower bits of a timestamp counter value.

7. A method as claimed in claim 2, comprising placing the starting instructions of the corruption functions so that they cannot be encompassed by a single breakpoint.

8. A computer program product, comprising:
at least one corruption function having a starting location;
at least one instruction that causes the program to be directed to the corruption function; and
**characterised by**:
code for setting an available hardware breakpoint such that, when the program has been directed to the corruption function and the starting location is reached, an exception is generated and the handling of the exception generates a return instruction so that the normal running of the program is resumed, causing the corruption function not to run.

9. A computer program product as claimed in claim 8, wherein the computer program product is intended for use on hardware having a known number of available instruction breakpoints, the computer program product comprising:
a plurality of corruption functions, each having a respective starting instruction, one corruption function being included for each of said available instruction breakpoints;
at least one instruction that causes the program to be directed to each corruption function; and
code for setting each available instruction breakpoint such that, when the program has been directed to one of the corruption functions and the respective one of said starting instructions is reached, a respective exception is generated, and the handling of each exception generates a return instruction so that normal running of the program is resumed, so that the respective corruption function does not run.

10. A computer program product as claimed in claim 8 or 9, wherein the corruption function causes random data to be written to a processor stack.

11. A computer program product as claimed in claim 8 or 9, wherein the corruption function causes data to be written to random locations in a processor stack.

12. A computer program product as claimed in any of claims 8 to 11, wherein the at least one instruction causes the program to be directed to the corruption function only when a non-deterministic condition is met.

13. A computer program product as claimed in claim 12, wherein the non-deterministic condition relates to lower bits of a timestamp counter value.

14. A computer program product as claimed in claim 8, wherein the starting instructions of the corruption functions are placed so that they cannot be encompassed by a single breakpoint.

## Patentansprüche

1. Verfahren zum Schützen eines Softwareprogramms, umfassend:
das Aufnehmen mindestens einer Zerstörungsfunktion (38, 40, 42, 44), die einen Anfangsplatz (46, 48, 50, 52) hat, in das Programm;
das Aufnehmen mindestens eines Befehls (54, 56, 58, 60), der bewirkt, dass das Programm auf die Zerstörungsfunktion gelenkt wird;
**gekennzeichnet durch**:
das Aufnehmen eines Codes zum Setzen eines verfügbaren Hardware-Breakpoints in das Programm derart, dass, wenn das Programm auf die Zerstörungsfunktion gelenkt ist und der Anfangsplatz erreicht ist, eine Ablaufunterbrechung erzeugt wird und die Verarbeitung der Ablaufunterbrechung einen Rücksprungbefehl erzeugt, **durch** den der normale Ablauf des Programms wieder aufgenommen wird, wodurch bewirkt wird, dass die Zerstörungsfunktion nicht abläuft.

2. Verfahren nach Anspruch 1, wobei das Softwareprogramm für den Gebrauch auf einer Hardware gedacht ist, die eine bekannte Anzahl verfügbarer Befehls-Breakpoints aufweist, umfassend:
das Aufnehmen einer Anzahl Zerstörungsfunktionen in das Programm, die jeweils einen zugehörigen Anfangsbefehl aufweisen, wobei eine Zerstörungsfunktion für jeden der verfügbaren Befehls-Breakpoints enthalten ist; und
das Aufnehmen mindestens eines Befehls in das Programm, der veranlasst, dass das Programm auf die jeweilige Zerstörungsfunktion gelenkt wird,
wobei jeder verfügbare Befehls-Breakpoint so eingestellt ist, dass, wenn das Programm auf eine der Zerstörungsfunktionen gelenkt wird und der entsprechende Anfangsbefehl erreicht ist, eine entsprechende Ablaufunterbrechung erzeugt wird, und die Verarbeitung einer jeden Ablaufunterbrechung einen Rücksprungbefehl erzeugt, durch den der normale Ablauf des Programms wieder aufgenommen wird, wodurch bewirkt wird, dass die entsprechende Zerstörungsfunktion nicht abläuft.

3. Verfahren nach Anspruch 1 oder 2, wobei die Zerstörungsfunktion bewirkt, dass Zufallsdaten in einen Prozessorstack geschrieben werden.

4. Verfahren nach Anspruch 1 oder 2, wobei die Zerstörungsfunktion bewirkt, dass Daten an zufällige Orte in einen Prozessorstack geschrieben werden.

5. Verfahren nach Anspruch 1, wobei der mindestens eine Befehl bewirkt, dass das Programm nur dann auf die Zerstörungsfunktion gelenkt wird, wenn eine nicht deterministische Bedingung erfüllt ist.

6. Verfahren nach Anspruch 5, wobei sich die nicht deterministische Bedingung auf die unteren Bits eines Zeitstempel-Zählerwerts bezieht.

7. Verfahren nach Anspruch 2, umfassend das Anordnen der Anfangsbefehle der Zerstörungsfunktionen derart, dass sie nicht durch einen einzigen Breakpoint umfasst werden können.

8. Computerprogrammprodukt, umfassend:
mindestens eine Zerstörungsfunktion, die einen Anfangsplatz aufweist;
mindestens einen Befehl, der veranlasst, dass das Programm auf die Zerstörungsfunktion gelenkt wird;
**gekennzeichnet durch**:
Code zum Setzen eines verfügbaren Hardware-Breakpoints derart, dass, wenn das Programm auf die Zerstörungsfunktion gelenkt ist und der Anfangsplatz erreicht ist, eine Ablaufunterbrechung erzeugt wird und die Verarbeitung der Ablaufunterbrechung einen Rücksprungbefehl erzeugt, **durch** den der normale Ablauf des Programms wieder aufgenommen wird, wodurch bewirkt wird, dass die Zerstörungsfunktion nicht abläuft.

9. Computerprogrammprodukt nach Anspruch 8, wobei das Computerprogrammprodukt für den Einsatz auf einer Hardware gedacht ist, die eine bekannte Anzahl verfügbarer Befehls-Breakpoints aufweist, und das Computerprogrammprodukt umfasst:
eine Anzahl Zerstörungsfunktionen, die jeweils einen zugehörigen Anfangsbefehl aufweisen, wobei eine Zerstörungsfunktion für jeden der verfügbaren Befehls-Breakpoints enthalten ist;
mindestens einen Befehl, der veranlasst, dass das Programm auf die jeweilige Zerstörungsfunktion gelenkt wird; und
Code zum Einstellen eines jeden verfügbaren Befehls-Breakpoints derart, dass, wenn das Programm auf eine der Zerstörungsfunktionen gelenkt wird und der entsprechende Anfangsbefehl erreicht ist, eine entsprechende Ablaufunterbrechung erzeugt wird, und die Verarbeitung einer jeden Ablaufunterbrechung einen Rücksprungbefehl erzeugt, durch den der normale Ablauf des Programms wieder aufgenommen wird, wodurch bewirkt wird, dass die entsprechende Zerstörungsfunktion nicht abläuft.

10. Computerprogrammprodukt nach Anspruch 8 oder 9, wobei die Zerstörungsfunktion bewirkt, dass Zufallsdaten in einen Prozessorstack geschrieben werden.

11. Computerprogrammprodukt nach Anspruch 8 oder 9, wobei die Zerstörungsfunktion bewirkt, dass Daten an zufällige Orte in einen Prozessorstack geschrieben werden.

12. Computerprogrammprodukt nach irgendeinem der Ansprüche 8 bis 11, wobei der mindestens eine Befehl bewirkt, dass das Programm nur dann auf die Zerstörungsfunktion gelenkt wird, wenn eine nicht deterministische Bedingung erfüllt ist.

13. Computerprogrammprodukt nach Anspruch 12, wobei sich die nicht deterministische Bedingung auf die unteren Bits eines Zeitstempel-Zählerwerts bezieht.

14. Computerprogrammprodukt nach Anspruch 8, wobei die Anfangsbefehle der Zerstörungsfunktionen derart angeordnet sind, dass sie nicht durch einen einzigen Breakpoint umfasst werden können.

## Revendications

1. Procédé de protection d'un programme logiciel, le procédé comprenant :
inclure dans le programme au moins une fonction de corruption (38, 40, 42, 44) ayant un emplacement de départ (46, 48, 50, 52) ;
inclure dans le programme au moins une instruction (54, 56, 58, 60) qui amène le programme à être dirigé vers la fonction de corruption ;
**caractérisé par** :
inclure dans le programme, un code pour établir un point d'arrêt matériel disponible de telle sorte que, lorsque le programme a été dirigé vers la fonction de corruption et que l'emplacement de départ est atteint, une exception est produite, et la manipulation de l'exception produit une instruction de retour de façon que l'exécution normale du programme soit reprise, en amenant la fonction de corruption à ne pas s'exécuter.

2. Procédé selon la revendication 1, dans lequel le programme logiciel est destiné à être utilisé sur du matériel ayant un nombre connu de points d'arrêt d'instruction disponibles, le procédé comprenant :
inclure dans le programme une pluralité de fonctions de corruption, chacune ayant une instruction de démarrage respective, une fonction de corruption étant incluse pour chacun desdits points d'arrêt d'instruction disponibles ; et
inclure dans le programme au moins une instruction qui amène le programme à être dirigé vers chaque fonction de corruption ;
où chaque point d'arrêt d'instruction disponible est établi de façon que lorsque le programme a été dirigé vers une des fonctions de corruption et que l'instruction respective desdites instructions de démarrage a été atteinte, une exception respective est produite, et la manipulation de chaque exception produit une instruction de retour de sorte que l'exécution normale du programme est reprise, de manière que la fonction de corruption respective ne s'exécute pas.

3. Procédé selon la revendication 1 ou 2, dans lequel la fonction de corruption amène des données aléatoires à être écrites sur une pile de processeur.

4. Procédé selon la revendication 1 ou 2, dans lequel la fonction de corruption amène des données à être écrites sur des emplacements aléatoires dans une pile de processeur.

5. Procédé selon la revendication 1, dans lequel la au moins une instruction amène le programme à être dirigé vers la fonction de corruption seulement lorsqu'une condition non déterministe se présente.

6. Procédé selon la revendication 5, dans lequel la condition non déterministe se rapporte à des bits inférieurs d'une valeur de comptage d'estampilles temporelles.

7. Procédé selon la revendication 2, comprenant le placement des instructions de démarrage des fonctions de corruption de façon qu'elles ne puissent pas être couvertes par un seul point d'arrêt.

8. Produit de programme informatique, comprenant :
au moins une fonction de corruption ayant un emplacement de départ ;
au moins une instruction qui amène le programme à être dirigé vers la fonction de corruption ; et
**caractérisé par** :
un code pour établir un point d'arrêt matériel disponible de façon que lorsque le programme a été dirigé vers la fonction de corruption et que l'emplacement de démarrage a été atteint, une exception soit faite, et la manipulation de l'exception produit une instruction de retour de sorte que l'exécution normale du programme est reprise, en amenant la fonction de corruption à ne pas s'exécuter.

9. Produit de programme informatique selon la revendication 8, dans lequel le produit de programme informatique est destiné à être utilisé sur du matériel ayant un nombre de points d'arrêt d'instruction disponibles, le produit de programme informatique comprenant :
une pluralité de fonctions de corruption, chacune ayant une instruction de démarrage respective, une fonction de corruption étant incluse pour chacun des points d'arrêt d'instruction disponibles ;
au moins une instruction qui amène le programme à être dirigé vers chaque fonction de corruption ; et
un code pour établir chaque point d'arrêt d'instruction disponible de telle sorte que, lorsque le programme a été dirigé vers une des fonctions de corruption et que l'instruction respective parmi lesdites instructions de démarrage a été atteinte, une exception respective est produite, et la manipulation de chaque exception produit une instruction de retour de sorte que l'exécution normale du programme est reprise, de manière à ce que la fonction de corruption respective ne s'exécute pas.

10. Produit de programme informatique selon la revendication 8 ou 9, dans lequel la fonction de corruption amène des données aléatoires à être écrites sur une pile de processeur.

11. Produit de programme informatique selon la revendication 8 ou 9, dans lequel la fonction de corruption amène des données à être écrites sur des emplacements aléatoires dans une pile de processeur.

12. Produit de programme informatique selon l'une quelconque des revendications 8 à 11, dans lequel la au moins une instruction amène le programme à être dirigé vers la fonction de corruption seulement lorsqu'une condition non déterministe est rencontrée.

13. Produit de programme informatique selon la revendication 12, dans lequel la condition non déterministe se rapporte à des bits inférieurs d'une valeur de comptage d'estampilles temporelles.

14. Produit de programme informatique selon la revendication 8, dans lequel les instructions de démarrage des fonctions de corruption sont placées de façon à ne pas pouvoir être couvertes par un seul point d'arrêt.
